(19) Europäisches Patentamt
European Patent Office
Office européen des brevets

(11) Veröffentlichungsnummer: **0 303 935 A2**

# (12) EUROPÄISCHE PATENTANMELDUNG

(21) Anmeldenummer: **88112888.8**

(51) Int. Cl.[4]: **C08G 63/64**

(22) Anmeldetag: **08.08.88**

(30) Priorität: **20.08.87 DE 3727729**

(43) Veröffentlichungstag der Anmeldung:
**22.02.89 Patentblatt 89/08**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Pielartzik, Harald, Dr.**
**Doerperhofstrasse 39**
**D-4150 Krefeld(DE)**
Erfinder: **Dhein, Rolf, Dr.**
**Deswatinesstrasse 30**
**D-4150 Krefeld(DE)**
Erfinder: **Meyer, Rolf-Volker, Dr.**
**Buchheimer Strasse 23**
**D-4150 Krefeld(DE)**
Erfinder: **Traenckner, Hans-Joachim, Dr.**
**Wedelstrasse 46**
**D-4150 Krefeld(DE)**
Erfinder: **Ostlinning, Edgar, Dr.**
**Rembrandtstrasse 37**
**D-4000 Düsseldorf 1(DE)**

## (54) Thermotrope aromatische Polyestercarbonate, ein Verfahren zu ihrer Herstellung und ihre Verwendung.

(57) Thermotrope vollaromatische Polyestercarbonate, die einkondensierte Reste von gegebenenfalls substituierter 3-Hydroxybenzoesäure enthalten, besitzen hohe Steifigkeit, hohe Schlagzähigkeit und Reißdehnung und lassen sich dennoch unter üblichen Bedingungen aufgrund günstiger Schmelzviskosität verarbeiten.

EP 0 303 935 A2

Xerox Copy Centre

# Thermotrope aromatische Polyestercarbonate, ein Verfahren zu ihrer Herstellung und ihre Verwendung

Die Erfindung betrifft vollaromatische, thermotrope Polyestercarbonate mit hoher Schlagzähigkeit und Reißdehnung sowie günstiger Schmelzviskosität, ein Verfahren zu ihrer Herstellung und ihre Verwendung zur Herstellung von Formkörpern, Filamenten, Folien und Fasern.

Als "thermotrop" bezeichnet man solche Substanzen, die flüssig-kristalline Schmelzen bilden. Thermotrope Polykondensate sind hinreichend bekannt, vgl. z.B.:

F.E. Mc Farlane et al, Liquid Crystal Polymers II, Contemporary Topies in Polymer Science, Vol. 2, Plenum Publishing Corporation 1977;

W.J. Jackson und H.F. Kuhfuss, J. Polymer, Polymer Chem. Ed. 14, 2042 (1976);

W.C. Wooten et al, in A. Ciferri "Ultra-high Modules Polymers", Applied Science Publ., London 1979, S. 362 ff.;

A. Blumstein et al., "Liquid Crystalline Order in Polymers"; Academic Press 1978;

J. Preston, Angew. Makromol. Chem. 109/110, S. 1-19 (1982);

A. Ciferri, W.R. Krigbaum, R.B. Meyer "Polymer Liquid Crystals", Academic Press, New Yirk, 1982;

EP 1185, 1340, 8855, 11 640, 15 856, 17 310, 18 145, 18 709, 22 344, 44 205, 49 615;

US 39 91 013, 39 91 014, 40 66 620, 40 67 852, 40 83 829, 41 07 143, 42 26 970, 42 32 143, 42 32 144, 42 45 082, 42 69 965, 43 35 232, 43 81 389, 43 99 270, 43 98 015, 44 47 592, 45 00 699;

JP 59/1 26 431;

WO 79/792, 79/1 030, 79/1 040.

Der flüssig-kristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Untersuchung der Polykondensate erfolgte nach dem Aufschmelzen der Proben bei Temperaturen zwischen 280 und 400 °C. Sofern in diesem gesamten Bereich oder in einem Teil davon eine Aufhellung der zwischen den gekreuzten Nicolschen Prismen beobachteten Schmelze auftrat, wurde das Polykondensat als thermotrop flüssig-kristallin eingestuft.

Die flüssig-kristallinen Polykondensate zeigen in der Meßanordnung Wert über 1 Skalenteil, meist Werte von 3 bis 90 Skalenteilen. Für amorphe Schmelzen, z.B. aromatische Polycarbonate, wurden dagegen Werte von weniger als 0,1 Skalenteile gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley and Sons, New York, Sydney, Toronto 1974, beschrieben ist.

Formkörper, die aus flüssig-kristalliner Schmelze hergestellt werden, weisen Steifigkeiten auf, wie sie normalerweise bei unverstärkten, aus isotroper Schmelze verarbeitbaren Polykondensaten nicht gefunden werden; jedoch läßt die Reißdehnung und geringe Zähigkeit solcher Formkörper manche Wünsche offen (DE-OS 2 704 315, US-PS 4 371 660, EP 0 213 609).

Durch Untersuchungen wurde bestätigt, daß thermotrope Polymere hoher Steifigkeit, d.h. hohen Elastizitätsmoduls, eine geringe Reißdehnung und Zähigkeit und thermotrope Polymere mit höherer Reißdehnung und Zähigkeit eine weniger ausgeprägte Steifigkeit besitzen (US 4 242 496, EP 205 855).

Die US-PS 4 435 561 und 4 398 018 beschreiben flüssig-kristalline Polyestercarbonate aus Hydrochinon, tert.-Butylhydrochinon, Terephthalsäure und Kohlensäure. Diese Polymere zeigen ein zeit- und temperaturabhängiges Zersetzungsverhalten durch Abspaltung von Isobuten (aus tert.-Butylhydrochinon) und weisen erhebliche Verarbeitungsmängel auf. In der US-PS 4 371 660 werden flüssig-kristalline Polyestercarbonate aus 6-Hydroxynaphthoesäure, Hydrochinon, aromatischen Dicarbonsäuren und Kohlensäure beschrieben. Die an diesen Produkten gemessene Steifigkeit (an Fasern ermittelt) liegt bei geringer Reißdehnung (2 %) auf mittlerem Niveau. Die EP 0 213 362 und 0 213 609 beschreiben Polyestercarbonatimide aus 5-Carboxyphthalimiden, aliphatischen und/oder aromatischen Diaminen oder Aminophenolen, Diphenolen, aromatischen Dicarbonsäuren, p-Hydroxybenzoesäure und Kohlensäure. Die Reißdehnung von 1,5 % liegt bei einer Reißfestigkeit von 170 MPa auf einem unbefriedigenden Niveau.

LC-Polymere, die dem Stand der Technik entsprechen, weisen z.B. ein hohes Zähigkeitsniveau bei

geringer Festigkeit und Dehnung (EP 0 132 637) oder hohe Festigkeiten bei geringer Reißdehnung und Zähigkeit (DE-OS 2 704 315 und US-PS 4 371 660) auf.

Wegen der für viele praktische Einsatzgebiete benötigten aber nicht gewährleisteten Eigenschaftskombination von guter Zähigkeit, Steifigkeit und Reißdehnung bei bekannten thermotropen, vollaromatischen LC-Polymeren kommt einer Verbesserung dieser Eigenschaftskombination große Bedeutung zu.

Aufgabe der Erfindung war es daher, thermotrope, vollaromatische Polyestercarbonate bereitzustellen, die gegenüber den Polyestercarbonaten der EP 0 132 637, DE-OS 2 704 315 und US-PS 4 371 660 ein höheres Zähigkeitsniveau, eine höhere Reißdehnung und eine hohe Steifigkeit besitzen.

Überraschenderweise wurde nun gefunden, daß vollaromatische, thermotrope Polyestercarbonate, die einkondensierte Reste von gewinkelten aromatischen Hydroxycarbonsäuren enthalten, die gewünschte Kombination vorteilhafter Eigenschaften aufweisen.

Gegenstand der vorliegenden Erfindung sind daher thermotrope, aromatische Polyestercarbonate auf Basis von

a) gegebenenfalls substituierten aromatischen Hydroxycarbonsäuren,

b) Diphenolen,

c) Kohlensäure und gegebenenfalls

d) aromatischen Dicarbonsäuren, wobei ein Teil der aromatischen Hydroxycarbonsäure als gegebenenfalls substituierte 3-Hydroxybenzoesäure (e) vorliegt und wobei - abgesehen von den Endgruppen -für die molaren Verhältnisse folgendes gilt:

a + b = 1,

b = c + d,

e/a = 0,02-0,50, bevorzugt 0,05-0,40, besonders bevorzugt 0,10-0,35 und

$$\frac{c}{c + d} = 0{,}2\text{-}1;$$

in Molbrüchen:

a = 0,3-0,95, vorzugsweise 0,5-0,85

b = 0,05-0,7, vorzugsweise 0,15-0,5

c = 0,05-0,70, vorzugsweise 0,15-0,50

d = 0-0,70, vorzugsweise 0-0,4

e = 0,05-0,50, vorzugsweise 0,1-0,35

Als aromatische Hydroxycarbonsäuren a) kommen z.B. Verbindungen der Formeln

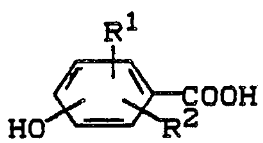

und

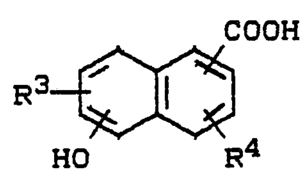

,

(I) (II)

worin

$R^1$ bis $R^4$ $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphtyl, Nahthyloxy, Biphenyl, Biphenyloxy, Tolyl, Tolyloxy), $C_7$-$C_{12}$-Alkylaryl (vorzugsweise Benzyl), Halogen (vorzugsweise Chlor und Brom) oder Wasserstoff bedeu ten und die Valenzen zwischen Kern und Hydroxylgruppe sowie zwischen Kern und Carboxylgruppe einen Winkel von 45 bis 180° bilden,

in Frage.

Bevorzugte aromatische Hydroxycarbonsäuren (a) sind z.B. 4-Hydroxy-3-methylbenzoesäure, 4-Hydroxy-3-phenylbenzoesäure, 4-Hydroxy-2-ethylbenzoesäure, 3-Chlor-4-hydroxybenzoesäure, 3-Brom-4-hydroxybenzoesäure, 4-Hydroxy-3-methoxybenzoesäure, 4-Hydroxybenzoesäure, 6-Hydroxynaphthoesäure, 4-Hydroxy-3-phenoxybenzoesäure, 6-Hydroxy-5-chlor-2-naphthoesäure, 6-Hydroxy-5-methyl-2-naphthoesäure, 6-Hydroxy-5-methoxy-2-naphthoesäure, 6-Hydroxy-4,7-dichlor-2-naphthoesäure und 2-hydroxybenzoesäure, besonders bevorzugt sind 4-Hydroxybenzoesäure und 6-Hydroxynaphthoesäure.

Als gegebenenfalls substituierte 3-Hydroxybenzoesäuren (e) werden z.B. genannt: 3-Hydroxy-4-methylbenzoesäure, 3-Hydroxy-4-phenylbenzoesäure, 3-Hydroxy-2-ethylbenzoesäure, 4-Chlor-3-hydroxybenzoesäure, 4-Brom-3-hydroxybenzoesäure, 3-Hydroxy-4-methoxybenzoesäure, 3-Hydroxy-4-phenoxybenzoesäure, 3-Hydroxy-2-methoxybenzoesäure und 3-Hydroxybenzoesäure.

Besonders bevorzugte aromatische 3-Hydroxycarbonsäuren (e) sind unsubstituierte Hydroxycarbonsäuren, wie 3-Hydroxybenzoesäure.

Als Diphenole b) kommen solche der Formel

HO - Z - OH (III)

in Frage, worin

Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ mit n = 2-4 verbundene Phenylenreste.

Bevorzugte Diphenole b) sind z.B. Hydrochinon, 4,4′-Dihydroxydiphenyl, 4,4′-Dihydroxydiphenylether, 4,4′-Dihydroxydiphenylethan, 4,4′-Dihydroxydiphenoxyethan, 3,5′-Dihydroxydiphenyl, 3,5′-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2′-Dimethyl-4,4′-dihydroxydiphenyl, 3,3′,5,5′-Tetramethyl-4,4′-dihydroxydiphenyl, 3,5′-Dimethoxy-4,4′-dihydroxydiphenylether, 1,2-(2-Chlor-4-hydroxyphenoxy)ethan, 4-Methoxy-2,6-dihydroxynaphthalin, Resorcin, 3,4′-Dihydroxydiphenyl, 3,4′-Dihydroxydiphenylether, 3,4′-Dihydroxydiphenoxyethan, 1,3-Dihydroxynphthalin, 1,6-Dihydroxynaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin.

Besonders bevorzugte Diphenole b) sind Hydrochinon und 4,4′-Dihydroxydiphenyl.

Als Derivate zum Einbau der c) Carbonatgruppen seien genannt: Diarylcarbonate, wie Diphenylcarbonat, Ditolylcarbonat, Phenyl-tolyl-carbonat und Dinaphthylcarbonat, Dialkylcarbonate, wie Diethylcarbonat und Dimethylcarbonat sowie Glykolcarbonat.

Ein bevorzugtes Derivat zum Einbau der c) Carbonatgruppen ist Diphenylcarbonat.

Als aromatische Dicarbonsäure d) kommen solche der Formel

HOOC - A - COOH (IV)

in Frage, worin

A einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$mit n = 1-4 verbundene Phenylenreste.

Bevorzugte aromatische Reste sind z.B. 1,4-Phenylen, 1,4-Naphthylen oder 4,4′-Biphenylen, worin die beiden Bindungen sich koaxial in entgegengesetzte Richtungen erstrecken, oder 1,5-Naphthylen, 2,6-Naphthylen oder 3,5′-Biphenylen, worin die beiden in entgegensetzte Richtungen zeigenden Bindungen parallel zueinander verschoben sind, sowie 1,3-Phenylen, 1,3-, 1,6-, 1,7- oder 2,7-Naphthylen oder 3,4′-Biphenylen, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren d) sind z.B. 1,4-Naphthalindicarbonsäure, 1,5-Naphthalindicarbonsäure, 2,6-Naphthalindicarbonsäure, Biphenyl-4,4′-dicarbonsäure, Biphenyl-3,3′-dicaronsäure, Diphenoxyethan-4,4′-dicarbonsäure, Diphenylether-4,4′-dicarbonsäure, Methylterephthalsäure, Methoxyterephthalsäure, Chlorterephthalsäure, 4-Chlornaphthalin-2,7-dicarbonsäure, 1,3-Naphthalindicarbonsäure, 1,6-Naphthalindicarbonsäure, 1,7-Naphthalindicarbonsäure, 2,7-Naphthalindicarbonsäure, Biphenyl-3,4′-dicarbonsäure, Diphenylether-3,4′-dicarbonsäure, 4-Methylisophthalsäure, 5-Methylisophthalsäure,

Diphenylether-4,4′-dichlor-3,3′-dicarbonsäure, Iso- und Terephthalsäure.

Besonders bevorzugte aromatische Dicarbonsäuren d) sind Iso- und Terephthalsäure.

Als Endgruppen können die erfindungsgemäßen Polyestercarbonate H, OH, $OC_6H_5$ oder von Kettenabbrechern herrührende Reste enthalten.

Die erfindungsgemäßen Polyestercarbonate können die Reste der Verbindungen (a) bis (e) in statistischer Verteilung oder in Blöcken enthalten.

Die erfindungsgemäßen Polyestercarbonate zeigen ein strukturviskoses Verhalten und besitzen bei T = 330 °C und $\dot{\gamma}$ = 1000 $s^{-1}$ (Schergeschwindigkeit) eine Schmelzviskosität von mindestens 20 Pas, vorzugsweise 40 Pas.

Die neuen thermotropen, vollaromatischen Polyestercarbonate sind auf konventionellen Verarbeitungsaggregaten bei Temperaturen unterhalb von 370 °C und vorzugsweise unterhalb einer Temperatur von 340 °C thermoplastisch verarbeitbar. Man arbeitet bevorzugterweise bei Temperaturen von ca. 280 °C bis 340 °C.

Die neuen thermotropen, vollaromatischen Polyestercarbonate besitzen eine sehr hohe Schlagzähigkeit, teilweise von über 140 $kJ/m^2$. Außerdem haben die erfindungsgemäßen Polyestercarbonate eine sehr hohe Reißfestigkeit, teilweise über 200 MPa. Weiterhin besitzen die bevorzugten Polyestercarbonate eine Reißdehnung von mindestens 2 %, vorzugsweise von mindestens 2,5 %, besonders bevorzugt von mindestens 3,0 %.

Daß diese neuen Polyestercarbonate diese günstige, bisher nicht bekannte Eigenschaftskombination aufweisen, ist besonders überraschend und war für den Fachmann nicht vorauszusehen, weil durch den Einbau anderer gewinkelter Monomerbaustiene, wie Resorcin, Bisphenol A, oder durch Erhöhung des Isophthalsäuregehaltes die gewünschte Eigenschaftskombination nicht erreichbar ist (Vergleichsbeispiele 1, 2 und 3).

Die erfindungsgemäßen Polyestercarbonate werden durch Schmelzumesterung der Phenylester mit den phenolischen Verbindungen und anschließender Polykondensation unter Abspaltung von Phenol hergestellt. Es wird so lange Phenol aus dem Reaktionsgemisch abdestilliert, bis der gewünschte Kondensationsgrad erreicht ist. Bevorzugt ist ein Verfahren, bei dem die Carbonsäuren mit einem Diarylcarbonat, vorzugsweise Diphenylcarbonat, in die Arylester überführt und diese dann mit den phenolischen Verbindungen umgesetzt werden.

Bevorzugt wird ein Verfahren, das die Herstellung der thermotropen Polymere in einer Eintropf-Reaktion ermöglicht, dergestalt, daß die Derivatisierung und Polykondensation in einem Reaktionsgefäß ohne Isolierung von Zwischenstufen durchgeführt werden kann. Die Derivatisierung der Carboxylgruppen soll vorzugsweise durch Umsetzung mit Diphenylcarbonat unter Abspaltung von $CO_2$ und Bildung der Phenylester erfolgen. Diese reagieren im weiteren Verlauf der Polykondensation unter Phenolabspaltung mit den Diphenolen.

Die Reste der Verbindungen (a) bis (e) werden im Verhältnis der Ausgangskomponenten in das Polyestercarbonat eingebaut. Eine Ausnahme bildet bei der oben beschriebenen bevorzugten Ausführungsform des Umesterungsverfahrens das Diarylcarbonat, das zum einen als Reagenz zur Bildung der Carbonsäurearylester und zum anderen für die Bildung der Carbonatgruppen im Polyestercarbonat erforderlich ist.

In einer bevorzugten Durchführungsform des Verfahrens werden die Reaktionskomponenten (a) bis (e) im gewünschten Verhältnis gemischt. Die benötigte Menge an Diarylcarbonat wird wie folgt berechnet:

a, e) gegebenenfalls substituierte Hydroxybenzoesäure
b) Diphenol
c) Dicarbonsäure
d) Diarylcarbonat [d] = [a, e] + 2 [c] + ([b] - [c])

In der bevorzugten Ausführungsform des Umesterungsverfahrens ist das Diarylcarbonat zum einen als Reagenz zur Bildung der Carbonsäurephenylester und zum anderen für die Bildung der Carbonatgruppen für die Bildung der Carbonatgruppen im Polyestercarbonat erforderlich.

Das Äquivalentverhältnis Diarylcarbonat/Carbonsäurederivat beträgt daher bei der bevorzugten Verfahrensweise mindestens 1:1, vorzugsweise 1,01 bis 1,1:1.

Wie aus dem Term ([b] - [c]) hervorgeht, wird über das Äquivalentverhältnis von Dicarbonsäure zu Diphenol der Gehalt an einkondensierten Carbonatgruppen bestimmt.

Es ist zweckmäßig, sowohl die Ver- oder Umesterungsreaktionen als auch die Polykondensationsreaktionen katalytisch zu beschleunigen. Derartige Katalysatoren sind bekanntlich z.B. Oxide, Hydride, Hydroxide, Halogenide, Alkoholate, Phenolate, Salze anorganischer oder organischer Säuren, Komplexsalze oder Mischsalze der Alkalimetalle wie Lithium, Natrium, Kalium, der Erdalkalimetalle wie Magnesium, Calcium, der Nebengruppenelemente wie Vanadium, Titan, Mangan, Cobalt, Nickel, Zink, Lanthan, Cer, Zirkonium oder der Elemente aus anderen Gruppen des Periodensystems wie Germanium, Zinn, Blei und Antimon

oder auch die Alkalimetalle oder Erdalkalimetalle selbst. Insbesondere werden genannt: Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Titantetrabutylat, Titantetrapropylat, Zirkoniumbutylat, Zirkoniumpropylat, Titantetraphenolat, Natriumphenolat, Germaniumdioxid, Antimontrioxid, Di-butyl-zinn-diacetat sowie Dibutyl-dimethoxy-zinn.

Weiterhin können als Katalysatoren eingesetzt werden: cyclische und/oder bicyclische aromatische oder aliphatische stickstoffhaltige Basen, die 2 bis 3 Stickstoffatome enthalten. Beispielsweise werden genannt: Imidazol, 4,5-Diphenyl-1H-imidazol, 1,10-Phenanthrolin, 2,2′-Dipyridyl, 1H-Benzimidazol, 1,2-Dimethyl-1H-benzimidazol, 2-Methyl-1H-imidazol, 1-Methyl-1H-imidazol, 1H-Pyrazol, 4-Dimethylaminopyridin, 4-Pyrrolidino-pyridin, 1,8-Bis-(dimethylamino)-naphthalin sowie 1,8-Diazabicyclo-5.4.0-undec-7-en, 1,8-Diazabicyclo-4.3.0-non-5-en, 1,4-Diazabicyclo-2.2.2-octan und 1,4,5,6-Tetrahydro-1,2-dimethylpyrimidin. Vorzugsweise werden Imidazol und/oder Imidazolderivate eingesetzt, besonders bevorzugt Imidazol.

Die oben erwähnten Katalysatoren können auch im Gemisch miteinander eingesetzt werden.

Die Katalysatoren werden in Mengen von ca. 0,001 bis 5, bevorzugt 0,01 bis 2,5 Mol-%, bezogen auf eingewogene Carbonsäure oder ihrer Derivate, eingesetzt. Die jeweils günstigste Menge an Katalysator kann leicht durch entsprechende Vorversuche ermittelt werden. Die Menge hängt ab von der Art des jeweils eingesetzten Katalysators oder Katalysatorgemisches.

Die Reaktionstemperaturen bei dem bevorzugten Umesterungsverfahren betragen ca. 150 °C bis 350 °C, wobei man die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Im Prinzip kann sich eine Festphasennachkondensation bei Temperaturen bis zu ca. 250 °C anschließen, wobei die Schmelzviskositäten ansteigen und die erfindungsgemäßen mesomorphen Polyestercarbonate in p-Chlorphenol unlöslich werden; doch ist dies in der Regel unnötig.

Gelegentlich wird eine Molekulargewichtsregelung erwünscht, die durch die Polykondensationsreaktionen abbrechende, monofunktionelle Verbindungen erreicht werden kann.

Monofunktionelle Verbindungen in diesem Sinne sind monofunktionelle Carbonsäuren, vorzugsweise aromatischer Carbonsäuren wie Benzoesäure, Chlorbenzoesäuren, Methylbenzoesäuren, Naphthalincarbonsäuren oder Diphenylcar bonsäuren, monofunktionelle aromatische Hydroxyverbindungen wie Phenol, Methylphenole, Ethylphenole, p-Nonylphenol, p-Chlorphenol, 4-(1,1-Dimethylpropyl)phenol, 4-(1,1,3,3-Tetramethylbutyl)-phenol, Dodecylphenole, Dimethylphenol, Hydroxynaphthaline und monofunktionelle Thiophenole wie Thiophenol, 4-Methylthiophenol. Bevorzugt wird 4-Hydroxybiphenyl verwendet.

Ein weiterer Gegenstand der Erfindung ist also ein Verfahren zur Herstellung der neuen thermotropen, aromatischen Polyestercarbonate auf Basis von

a) gegebenenfalls substituierten aromatischen Hydroxycarbonsäuren,
b) Diphenolen,
c) Kohlensäure und gegebenenfalls
d) aromatischen Dicarbonsäuren, wobei ein Teil der aromatischen Hydroxycarbonsäure als gegebenenfalls substituierte 3-Hydroxybenzoesäure (e) vorliegt und wobei - abgesehen von den Endgruppen -für die molaren Verhältnisse folgendes gilt:

$a + b = 1$,
$b = c + d$,
$e/a = 0{,}02\text{-}0{,}50$, bevorzugt 0,05-0,40, besonders bevorzugt 0,10-0,35 und

$$\frac{c}{c + d} = 0{,}2\text{-}1;$$

in Molbrüchen:

a = 0,3-0,95, vorzugsweise 0,5-0,85,
b = 0,05-0,7, vorzugsweise 0,15-0,5,
c = 0,05-0,70, vorzugsweise 0,15-0,50,
d = 0-0,70, vorzugsweise 0-0,4,
e = 0,05-0,50, vorzugsweise 0,1-0,35, das dadurch gekennzeichnet ist, daß man
(a) gegebenenfalls substituierte aromatische Hydroxycarbonsäuren
(d) aromatische Dicarbonsäuren und
(e) gegebenenfalls substituierte 3-Hydroxybenzoesäure mit

(c) Diarylcarbonat verestert, den erhaltenen Arylester mit (b) Diphenol, Diarylcarbonat und gegebenenfalls Kettenabbrechern umestert und anschließend bei Temperaturen von 150 bis 350 °C in Gegenwart von 0,001 bis 5 Mol-% Katalysator, bezogen auf Carbonsäuren oder ihren Derivaten, gegebenenfalls unter vermindertem Druck polykondensiert.

Die erfindungsgemäßen thermotropen Polyestercarbonate können infolge ihrer relativ geringen Schmelzviskosität vorteilhaft aus der Schmelze zu Spritzgußformteilen, Fasern und Filmen verarbeitet werden, wobei durch auftretende Scherkräfte eine Molekülorientierung erzielt wird, die in hohem Maße von der Stärke der Scherkräfte beeinflußt wird. Desweiteren zeigen sie eine ausgeprägte Strukturviskosität, d.h., daß die Schmelzviskosität bei Erhöhung der Scherkräfte stark abfällt.

Ein weiteres wesentliches Merkmal der erfindungsgemäßen aromatischen, thermotropen Polyestercarbonate sind die hohen Schlagzähigkeitswerte.

Aus den erfindungsgemäßen Polyestercarbonaten können Formteile hoher Zugfestigkeit, außerordentlicher Zähigkeit und großer Dimensionsstabilität hergestellt werden. Da die Polyestercarbonate außerordentlich chemikalienresistent und flammwidrig sind, eignen sie sich bevorzugt zur Herstellung von

- elektrotechnischen Artikeln, wie Isolatoren, gedruckten Schaltungen, Steckkontakte, Armaturenteile,
- Teilen chemisch-technischer Apparate, wie Rohre, Behälterauskleidungen, Rotoren, Gleitlager, Dichtungen,
- Teilen der Flugzeuginnenausstattung,
- Teilen medizinisch-technischer Geräte,
- Bauteile von Klimaanlangen und Ventilen.

Aufgrund ihrer besonderen Eigenschaften bieten sich die erfindungsgemäßen Polyestercarbonate auch zur Herstellung von Folien und Fasern an.

Ein weiterer Gegenstand der Erfindung ist also die Verwendung der neuen Polyestercarbonate zur Herstellung von Formkörpern, Filamenten, Fasern und Filmen.

Obwohl es bereits bekannt war, bei der Herstellung von thermotropen aromatischen Polyestern einen Teil der aromatischen Hydroxycarbonsäure durch 3-Hydroxybenzoesäure auszutauschen (vergl. Appl. Chem. Macromol. Symp. 28, S. 800 (1982), DE-OS 21 644 73, Macromol. Chem., Rapid Commun. 8, 159 (1987)), war es dennoch überraschend, daß trotz Erhöhung der Kettenflexibilität durch Einkondensieren eines weiteren gewinkelten Monomerbausteins flüssigkristalline Polyestercarbonate mit der ungewöhnlichen Eigenschaftskombination von hoher Steifigkeit und Reißdehnung bei hoher Zähigkeit erhalten wurden.

Beim Einbau von 3-Hydroxybenzoesäure in flüssigkristalline Polyester wird nämlich von Eigenschaftseinbußen und von Verlust des LC-Charakters berichtet. (Macromolecules, 16, 1227 (1983)).

Außerdem wird berichtet, daß Co-Polymere aus 4- und 3-Hydroxybenzoesäure nur nach einem speziellen Kondensationsverfahren (Abspaltung von Trimethylsilylchlorid; Polymere 1982, Vol. 23, S 1821) zugänglich sind.

Die nachfolgenden Beispiele sollen das erfindungsgemäße Verfahren verdeutlichen ohne es jedoch auf diese Beispiele einzuschränken.

## Beispiele

Die Prüfung der Schlagzähigkeit $a_n$ und Kerbschlagzähigkeit $a_k$ erfolgte an 80 x 10 x 4 mm-Prüfkörpern gemäß DIN 53 453 (ISO/R 179) bei 23 °C jeweils an 10 Prüfkörpern.

Die Bestimmung der Biegefestigkeit wurde an 80 x 10 x 40 mm-prüfkörpern gemäß DIN 53 452 (ISO/R 178) durchgeführt. Der Biege-E-Modul wurde gemäß DIN 53 457 ermittelt.

Die Bestimmung der Zugfestigkeit erfolgte am Schulterstab (0,7-fach) gemäß DIN 53 455. Der Zug-E-Modul wurde gemäß der DIN 53 457 ermittelt. Das Fließverhalten in der Schmelze wurde durch die Messung der Schmelzviskosität beurteilt. Die Düse hat, wenn nichts anderes angegeben, ein Längen- zu Dickenverhältnis (L/D) von 30:1.

Die Prüfergebnisse sind in Tabelle 1 zusammengefaßt.

## Beispiel 1

In einem Reaktionsgefäß mit Rührer, Kolonne und Destillierbrücke wurden
289,8 g 4-Hydroxybenzoesäure,
72,5 g 3-Hydroxybenzoesäure,
96,3 g Hydrochinon,
29,1 g Isophthalsäure,

802,2 g Diphenylcarbonat und
0,1 g Magnesiumoxid eingewogen.

Bei einer Innentemperatur von 160 °C begann die $CO_2$-Abspaltung. Die Innentemperatur wurde im Verlauf von 15 Min. auf 180 °C erhöht, 60 Min. konstant gehalten auf 220 °C erhöht und bis zum Ende der $CO_2$-Abspaltung konstant gehalten.

Das Reaktionsgemisch wurde auf 250 °C aufgeheizt und der Druck im Reaktor schrittweise bis auf 30 mbar erniedrigt. Nach 1 h hatte die Destillationsgeschwindigkeit sowie nachgelassen, daß die Innentemperatur auf 275 °C und anschließend 300 °C erhöht werden konnte. Nachdem die Phenolabspaltung weitgehend abgeschlossen war, wurde der Druck im Reaktor auf 0,2 mbar reduziert. Nach 1 h unter diesen Kondensationsbedingungen war die Reaktion beendet.

Produktbeschreibung: hochviskos, sehr starke Faserstruktur
Produktfarbe: beige

Das Produkt wurde bei T = 330 °C und einer Formtemperatur von T = 70 °C verarbeitet.

Nach der Vorschrift von Beispiel 1 wurden die in Tabelle 1 zusammengefaßten Polyestercarbonate hergestellt.

Die Eigenschaften des Polycarbonats sind in Tabelle 3 aufgeführt.

Tabelle 1

| Beispiel | Ausgangsprodukte | Verarbeitungs-/Formtemperatur |
|---|---|---|
| 2 | 207,2 g 4-Hydroxybenzoesäure<br>82,9 g 3-Hydroxybenzoesäure<br>99,1 g Hydrochinon<br>24,9 g Isophthalsäure<br>708,5 g Diphenylcarbonat<br>0,04 g Natriumphenolat | 330/70 °C |
| 3 | 207,2 g 4-Hydroxybenzoesäure<br>82,9 g 3-Hydroxybenzoesäure<br>99,1 g Hydrochinon<br>24,9 g Terephthalsäure<br>687,6 g Diphenylcarbonat<br>0,05 g Dibutyldimethoxyzinn | 310/70 °C |
| 4 | 165,7 g 4-Hydroxybenzoesäure<br>41,4 g 3-Hydroxybenzoesäure<br>165,2 g Hydrochinon<br>124,6 g Isophthalsäure<br>819,4 g Diphenylcarbonat<br>0,05 g Dibutylzinndilaurat | 300/70 °C |
| 5 | 220,8 g 4-Hydroxybenzoesäure<br>44,2 g 3-Hydroxybenzoesäure<br>140,8 g Hydrochinon<br>79,7 g Isophthalsäure<br>803,2 g Diphenylcarbonat<br>0,03 g Titantetraisopropylat | 330/70 °C |
| 6 | 298,1 g 4-Hydroxybenzoesäure<br>74,5 g 3-Hydroxybenzoesäure<br>99,0 g Hydrochinon<br>785,8 g Diphenylcarbonat<br>0,05 g Dibutylzinndilaurat | 330/70 °C |
| 7 | 289,8 g 4-Hydroxybenzoesäure<br>48,3 g 3-Hydroxybenzoesäure<br>115,5 g Hydrochinon<br>29,1 g Terephthalsäure<br>802,2 g Diphenylcarbonat<br>0,1 g Magnesiumoxid | 330/70 °C |

Tabelle 1 (Fortsetzung)

| Beispiel | Ausgangsprodukte | Verarbeitungs-/Formtemperatur |
|---|---|---|
| 8 | 140,8 g 4-Hydroxybenzoesäure<br>23,5 g 3-Hydroxybenzoesäure<br>37,4 g Hydrochinon<br>31,6 g 4,4′-Dihydroxydiphenyl<br>14,1 g Terphthalsäure<br>14,1 g Isophthalsäure<br>412,2 g Diphenylcarbonat<br>0,05 g Dibutylzinndilaurat | 310/70 °C |

Analog zur Vorschrift in Beispiel 1 wurden folgende Vergleichsprodukte hergestellt, mit dem Unterschied, daß hier andere gewinkelte Bausteine als Comonomere eingesetzt wurden (Tabelle 2).

Tabelle 2

| Vergleichsbeispiele | Ausgangsprodukte | Verarbeitungs-/Formtemperatur |
|---|---|---|
| 1 | 152,5 g 4-Hydroxybenzoesäure<br>9,4 g Hydrochinon<br>63,2 g 4,4′-Dihydroxydiphenyl<br>38,8 g Bisphenol A<br>28,2 g Isophthalsäure<br>420,2 g Diphenylcarbonat<br>0,4 g Natriumphenolat | 330/70 °C |
| Vergleichsbeispiele | Ausgangsprodukte | Verarbeitungs-/Formtemperatur |
| 2 | 290,0 g 4-Hydroxybenzoesäure<br>82,6 g Hydrochinon<br>27,9 g 4,4′-Dihydroxydiphenyl<br>99,7 g Isophthalsäure<br>786,6 g Diphenylcarbonat<br>0,05 g Dibutylzinndilaurat | 330/70 °C |
| 3 | 215,5 g 4-Hydroxybenzoesäure<br>52,8 g Hydrochinon<br>39,6 g Resorcin<br>19,9 g Terephthalsäure<br>550,1 g Diphenylcarbonat<br>0,1 g Magnesiumoxid | 330/70 °C |

Die Eigenschaften der Produkte aus den Beispielen 1 bis 8 und die der Vergleichsprodukte (Vergleichsbeispiele 1 bis 3) sind in Tabelle 3 zusammengefaßt.

Tabelle 3

| Bsp. Nr. | Schmelzvisk. $T = 330\,^\circ C$; $\gamma = 1000\ s^{-1}$ Pas | Schlagz./Kerbschlagz. $kJ/m^2$ | Reißfest. MPa | Reißdehnung % | Zug-E-Mod. MPa | Biegefest. MPa | Randfaserdehnung % | Biegemodul MPa |
|---|---|---|---|---|---|---|---|---|
| 1 | 80 | 144/40 | 210 | 4,1 | 17500 | 186 | 5,6 | 11000 |
| 2 | 60 | 160/50 | 230 | 3,5 | 13280 | 179 | 5,5 | 8037 |
| 3 | 70 | 148/40 | 235 | 3,2 | 13000 | 201 | 5,1 | 10700 |
| 4 | 65 | 140/45 | 250 | 5,2 | 12300 | 177 | 8,8 | 8000 |
| 5 | 90 | 222/55 | 235 | 4,3 | 19590 | 184 | 5,4 | 12740 |
| 6 | 120 | 204/45 | 420 | 4,1 | 24650 | 206 | 5,4 | 10050 |
| 7 | 115 | 180/40 | 330 | 3,2 | 22430 | 187 | 5,1 | 11150 |
| 8 | 120 | 185/55 | 220 | 3,6 | 16780 | 195 | 5,7 | 12300 |
| Vergleichsbeispiel | | | | | | | | |
| 1 | 70 | 25/9 | 96 | 2,6 | 3620 | 109 | 5,3 | 4530 |
| 2 | 80 | 26/16 | 130 | 1,5 | 15400 | 116 | 3,7 | 5700 |
| 3 | 100 | 27/15 | 126 | 5,2 | 7400 | 140 | 4,4 | 5160 |

Aus den Vergleichsbeispielen 1-3 ist erkennbar, daß die Struktur der gewinkelten Monomereinheit eine wichtige Rolle spielt.

Bei vergleichbaren Gehalten an Hydroxybenzoesäure bewirkt eine geringe Menge an Bisphenol-A als gewinkelter Baustein bereits einen deutlichen Rückgang der Steifigkeit.

Mit Isophthalsäure als gewinkeltem Baustein wird zwar ein akzeptabler Zug-E-Modul erreicht, Reißdehnung und Zähigkeit sind unbefriedigend.

Mit Resorcin als Baustein wird zwar die Reißdehnung verbessert, alle anderen Eigenschaften bleiben unbefriedigend.

## Ansprüche

1. Thermotrope, vollaromatische Polyestercarbonate auf basis von

a) gegebenenfalls substituierten aromatischen Hydroxycarbonsäuren,
b) Diphenolen,
c) Kohlensäure und gegebenenfalls
d) aromatischen Dicarbonsäuren,

wobei ein Teil der aromatischen Hydroxycarbonsäure als gegebenenfalls substituierte 3-Hydroxybenzoesäure (e) vorliegt und wobei - abgesehen von den Endgruppen - für die molaren Verhältnisse folgendes gilt:

$a + b = 1$,
$b = c + d$,
$e/a = 0{,}02\text{-}0{,}50$,
$\frac{c}{c + d} = 0{,}2\text{-}1$;

in Molbrüchen:
$a = 0{,}3\text{-}0{,}95$,
$b = 0{,}05\text{-}0{,}7$,
$c = 0{,}05\text{-}0{,}30$,
$d = 0\text{-}0{,}70$,
$e = 0{,}05\text{-}0{,}50$.

2. Polyestercarbonate nach Anspruch 1, dadurch gekennzeichnet, daß sie die Reste der Verbindungen (a) bis (e) in statistischer Verteilung oder in Blöcken enthalten.

3. Polyestercarbonate nach Ansprüchen 1 und 2, dadurch gekennzeichnet, daß sie bei $T = 330\,^\circ C$ und $\gamma = 1000\ s^{-1}$ eine Schmelzviskosität von mindestens 20 Pas aufweisen.

4. Polyestercarbonate nach Ansprüchen 1 und 2, dadurch gekennzeichnet, daß sie bei $T = 330\,^\circ C$ und $\gamma = 1000\ s^{-1}$ eine Schmelzviskosität von mindestens 40 Pas aufweisen.

5. Polyestercarbonate nach Ansprüchen 1 bis 4, dadurch gekennzeichnet, daß das Verhältnis a/e 0,05 bis 0,4 beträgt.

6. Polyestercarbonate nach Ansprüchen 1 bis 4, dadurch gekennzeichnet, daß das Verhältnis a/e 0,10 bis 0,35 beträgt.

7. Verfahren zur Herstellung von thermotropen, aromatischen Polyestercarbonaten auf Basis von

a) gegebenenfalls substituierten aromatischen Hydroxycarbonsäuren,
b) Diphenolen,
c) Kohlensäure und gegebenenfalls
d) aromatischen Dicarbonsäuren,

wobei ein Teil der aromatischen Hydroxycarbonsäure als gegebenenfalls substituierte 3-Hydroxybenzoesäure (e) vorliegt und wobei - abgesehen von den Endgruppen - für die molaren Verhältnisse folgendes gilt:

$a + b = 1$,
$b = c + d$,
$e/a = 0{,}02\text{-}0{,}50$,
$\frac{c}{c + d} = 0{,}2\text{-}1$;

in Molbrüchen:

a = 0,3-0,95,
b = 0,05-0,7,
c = 0,05-0,30,
d = 0-0,70,
e = 0,05-0,50,

dadurch gekennzeichnet, daß man

(a) gegebenenfalls substituierte aromatische Hydroxycarbonsäuren
(d) aromatische Dicarbonsäuren und
(e) gegebenenfalls substituierte 3-Hydroxybenzoesäure mit
(c) Diarylcarbonat verestert,

den erhaltenen Arylester mit (b) Diphenol, Diarylcarbonat und gegebenenfalls Kettenabbrechern umestert und anschließend bei Temperaturen von 150 bis 350 °C in Gegenwart von 0,001 bis 5 Mol-% Katalysator, bezogen auf Carbonsäuren oder ihren Derivaten, gegebenenfalls unter vermindertem Druck polymerisiert.

8. Verwendung von thermotropen aromatischen Polyestercarbonaten auf Basis von

a) gegebenenfalls substituierten aromatischen Hydroxycarbonsäuren,
b) Diphenolen,
c) Kohlensäure und gegebenenfalls
d) aromatischen Dicarbonsäuren,

wobei ein Teil der aromatischen Hydroxycarbonsäure als gegebenenfalls substituierte 3-Hydroxybenzoesäure (e) vorliegt und wobei - abgesehen von den Endgruppen - für die molaren Verhältnisse folgendes gilt:

a + b = 1,
b = c + d,
e/a = 0,02-0,50,
$\frac{c}{c + d}$ = 0,2-1;

in Molbrüchen:

a = 0,3-0,95,
b = 0,05-0,7,
c = 0,05-0,30,
d = 0-0,70,
e = 0,05-0,50,

zur Herstellung von Formkörpern, Filamenten, Fasern und Filmen.